# EUROPÄISCHE PATENTANMELDUNG

(11) **EP 3 842 329 A1**
(43) Veröffentlichungstag der Anmeldung: **30.06.2021**
(21) Anmeldenummer: 20213157.9
(22) Anmeldetag: 10.12.2020
(51) Int. Cl.: B62K 27/00, B60P 3/34, B62D 63/06, B62K 27/04

(54) **ANHÄNGER INSBESONDERE FÜR EIN FAHRRAD ZUM BEREITSTELLEN EINES NUTZRAUMS**

(30) Priorität: 23.12.2019 DE 102019135714
(71) Anmelder: Peter Hartz Marketing GmbH, 27570 Bremerhaven (DE)
(72) Erfinder: Hartz, Peter, 27570 Bremerhaven (DE)
(74) Vertreter: Weidner Stern Jeschke

(57) **Zusammenfassung**

Die Erfindung betrifft einen Anhänger insbesondere für ein Fahrrad zum Bereitstellen eines Nutzraums, wobei der Anhänger ein rollbares Untergestell mit einem Bodenelement, ein Dachelement und ein Verbindungselement zum Verbinden des Bodenelementes mit dem Dachelement in einem Aufbauzustand aufweist, und das Bodenelement zumindest teilweise oben offen ist, das Dachelement eine Dachfläche mit vier angrenzenden Seitenwänden aufweist und das Verbindungselement eine obere Fläche mit mindestens zwei angrenzenden, sich gegenüberliegenden Seitenwänden aufweist, und in einem Fahrtzustand das Dachelement das Verbindungselement und das Bodenelement von außen oben und zumindest teilweise seitlich umgibt und zum Erreichen des Aufbauzustandes des Anhängers das Dachelement und das Verbindungselement derart eingerichtet sind, dass das Dachelement durch ein im Wesentlichen vertikales Aufrichten eine Abmessung des Bodenelementes verlängert und das Verbindungselement durch Aufrichten eine Höhe des Bodenelementes erhöht, sodass ein fest umschlossener Nutzraum im Inneren des Anhängers vorliegt.

## Beschreibung

Die Erfindung betrifft einen Anhänger insbesondere für ein Fahrrad zum Bereitstellen eines Nutzraumes, wobei der Anhänger ein rollbares Untergestell mit einem Bodenelement, ein Dachelement und ein Verbindungelement zum Verbinden des Bodenelementes mit dem Dachelement in einem Aufbauzustand aufweist, und das Bodenelement zumindest teilweise oben offen ist, das Dachelement eine Dachfläche mit vier angrenzenden Seitenwänden aufweist und das Verbindungselement eine obere Fläche mit mindestens zwei angrenzenden, sich gegenüberliegenden Seitenwänden aufweist.

Mit der zunehmenden Nutzung von Fahrrädern und E-Bikes im Arbeitsalltag und in der Freizeit sind die Anforderungen an Fahrradanhänger gestiegen. Neben Anhängern für Kinder, Hunde und zum Transport von Lasten besteht ein zunehmender Bedarf an einem Anhänger mit erhöhtem Nutzraumvolumen zur Verwendung beispielsweise als Verkaufsanhänger und/oder Wohn- oder Schlafanhänger.

Bekannte Anhänger sind insbesondere für lange Fahrradtouren ungeeignet, da diese ein hohes Eigengewicht von über 40 kg aufweisen und durch hohe Aufbauten eine zu große Windlast haben, sodass der Fahrradfahrer leicht an die Grenzen seiner körperlichen Belastbarkeit kommt.

Neben Fahrradanhängern mit windanfälligen und kippanfälligen hohen Aufbauten sind auch Anhänger bekannt, bei denen auf ein Bodengestell Zeltplanen mittels Stangen oder aufblasbaren Schläuchen aufgebaut werden, um einen Campingwohn- und/oder -schlafraum bereitzustellen. Nachteilig ist die notwendige Zeit für den Aufbau von circa 30 Minuten sowie das Einpacken von nassen Zeltplanen bei Regen vor der Weiterfahrt. Des Weiteren ist ein Fahrradanhänger bekannt, bei dem eine obere gebogene Halbschale mittels eines Scharniers mit einer unteren gebogenen Hartschale verbunden ist und nach hinten ausgeklappt wird. Dadurch wird jedoch nicht eine Stehhöhe erreicht.

Die DE 296 13 150 U1 offenbart einen Fahrradanhänger für den Transport von Kleinkindern mit zwei baugleichen Schalenteilen, bei dem das obere Schalenteil als Deckel vertikal aufklappbar ist und im aufgeklappten Zustand auf der hinteren Seitenwand des unteren Schalenteils aufliegt.

Die US 3,838,880 A betrifft einen gefalteten Wohnwagenanhänger mit zwei boxenähnlichen Endabschnitten, wobei im gefalteten Zustand der eine Endabschnitt den anderen Endabschnitt überdeckt. Im aufgerichteten Zustand werden die beiden boxenartigen Endabschnitte durch eine Vielzahl von klappbaren Seitenwänden und Dachelementen verbunden.

Folglich besteht ein Bedarf an einem kompakten Anhänger während der Fahrt, der in Standzeiten frei von einer Fahrt einen ausreichenden Raum zur Nutzung bietet.

Aufgabe der Erfindung ist es, den Stand der Technik zu verbessern.

Gelöst wird die Aufgabe durch einen Anhänger insbesondere für ein Fahrrad zum Bereitstellen eines Nutzraums, wobei der Anhänger ein rollbares Untergestell mit einem Bodenelement, ein Dachelement und ein Verbindungselement zum Verbinden des Bodenelementes mit dem Dachelement in einem Aufbauzustand aufweist, und das Bodenelement zumindest teilweise oben offen ist, das Dachelement eine Dachfläche mit vier angrenzenden Seitenwänden aufweist und das Verbindungselement eine obere Fläche mit mindestens zwei angrenzenden, sich gegenüberliegenden Seitenwänden aufweist, wobei in einem Fahrtzustand das Dachelement das Verbindungselement und das Bodenelement von außen oben und zumindest teilweise seitlich umgibt und zum Erreichen des Aufbauzustandes des Anhängers das Dachelement und das Verbindungselement derart eingerichtet sind, dass das Dachelement durch ein im wesentlichen vertikales Aufrichten eine Abmessung des Bodenelementes verlängert und das Verbindungselement durch Aufrichten eine Höhe des Bodenelementes erhöht, sodass ein fest umschlossener Nutzraum im Inneren des Anhängers vorliegt.

Somit wird ein Anhänger insbesondere für ein Fahrrad bereitgestellt, welcher sich sowohl im Fahrtzustand als auch im Aufbauzustand optimal nutzen lässt, da der Anhänger im Fahrtzustand sehr kompakt ist und dagegen im Aufbauzustand ausreichend Raum zur Nutzung, beispielsweise als Campinganhänger, bietet.

Der kompakte Fahrtzustand wird insbesondere dadurch erreicht, dass auf dem Bodenelement zunächst das Verbindungselement und anschließend das Dachelement gestapelt angeordnet sind, wobei das Dachelement außen um das Verbindungselement und das Bodenelement angeordnet ist. Hierbei umgibt das Dachelement das Verbindungselement und das Bodenelement oben bevorzugt vollständig und an den Seiten zumindest teilweise. Durch die kompakte, gestapelte Anordnung von nur drei Elementen - dem Bodenelement, dem Verbindungselement und dem Dachelement - wird während der Fahrt ein hoher Aufbau und somit eine Wind- und Kippanfälligkeit vermieden.

Folglich werden die Verkehrssicherheit sowie die Einhaltung der Verkehrsordnung gewährleistet.

Dagegen kann im Aufbauzustand frei von einer Fahrt des Anhängers der Raum im Inneren des Anhängers vergrößert werden, indem durch ein im Wesentlichen vertikales Aufrichten des zuoberst gestapelten Dachelementes eine Höhe vergrößert und eine Abmessung des Bodenelementes verlängert und somit die Länge und/oder die Breite des Anhängers vergrößert wird, sowie das Verbindungselement derart aufgerichtet wird, dass es anliegend an dem Bodenelement und dem aufgerichteten Dachelement beide verbindet und in diesem Bereich die Höhe des Bodenelementes, welche im Fahrtzustand vorliegt, erhöht. Dadurch wird eine Stehhöhe, insbesondere im Eingangsbereich des Anhängers für ein Fahrrad, erreicht. Somit wird ein Anhänger aus nur drei festen, dreidimensional geformten Elementen (Dachelement, Bodenelement, Verbindungselement) bereitgestellt, bei dem beim Aufrichten das Dachelement eine Abmessung des Bodenelementes verlängert und durch Aufrichten des Dachelementes und des Verbindungselementes eine Höhe des Bodenelementes erhöht wird. Durch die drei Elemente aus einem festen, formbeständigen Werkstoff wird im aufgerichteten Zustand ein geschützter Campingraum bereitgestellt und deshalb gerade nicht Folie oder Zeltplane verwendet.

Somit wird im Aufbauzustand ein Nutzraum geschaffen, welcher von einem Menschen betreten und zum Wohnen und/oder Schlafen genutzt werden kann. Es ist besonders vorteilhaft, dass das Überführen vom Fahrtzustand zum Aufbauzustand oder umgekehrt nur wenige Minuten, insbesondere circa 10 Minuten, bevorzugt circa 5 Minuten, dauert und das Aufrichten sowie das Ineinanderstapeln der drei Elemente mittels weniger Handgriffe erfolgt.

Dadurch wird im Fahrtzustand eine kleinere Bauform gegenüber bekannten Fahrradanhängern realisiert, während im Aufbauzustand in einfacher Weise ein ausreichend großer Nutzraum bereitgestellt wird, welcher fest umschlossen ist.

Ein wesentlicher Gedanke der Erfindung beruht darauf, dass mittels drei festen, entsprechend dreidimensional geformten Elementen - dem Bodenelement, dem Verbindungselement und dem Dachelement - für den Fahrtzustand eine kompakte Stapelung dieser Elemente mit einer Umhüllung durch das Dachelement bereitgestellt wird, während für den Aufbauzustand zum Erstellen eines größeren Nutzraumes als das Innere des Anhängers im Fahrtzustand, das Dachelement mit seiner Dachfläche vertikal so aufgerichtet wird, dass das Dachelement eine Abmessung des Bodenelementes verlängert und das Verbindungselement zwischen dem Bodenelement und dem nun höher vertikal aufgerichteten Dachelement vertikal aufgerichtet wird, sodass das Verbindungselement die niedrigere Höhe des Bodenelementes und die höhere Höhe des vertikal aufgerichteten Dachelementes verbindet. Somit wird ein ausreichend großer fest vom Bodenelement, Verbindungselement und Dachelement umschlossener Nutzraum bereitgestellt.

Folgendes Begriffliche sei erläutert:

Unter einem "Anhänger" wird insbesondere ein Fahrzeug verstanden, welches über eine Ladefläche und/oder einen Laderaum zur Beförderung aufweist, jedoch über keinen eigenen Hauptantrieb verfügt. Der Anhänger wird insbesondere hinter einem Zugfahrzeug, wie beispielsweise einem Kraftrad oder Fahrrad, mitgeführt. Der innere Raum des Anhängers im Fahrtzustand ist insbesondere kleiner als der geschaffene Nutzraum im Aufbauzustand. Der Anhänger weist insbesondere ein rollbares Untergestell, das Bodenelement, das Verbindungselement und das Dachelement auf. Vom Zugfahrzeug werden die Zugkräfte insbesondere über eine Deichsel auf den Anhänger übertragen. Eine Anhängerkupplung dient insbesondere zur Verbindung zwischen dem Zugfahrzeug und dem Anhänger. Bei einem Anhänger kann es sich insbesondere um einen Transport-, Lasten-, Verkaufs-, Camping-, Wohn-, Schlafanhänger und/oder einen sonstigen Anhänger handeln. Bei einem Anhänger kann es sich auch um einen Auflieger handeln, beispielsweise mit einer Stützlast in einem Bereich von 0,3 bis 6,5 kg.

Unter einem "rollbaren Untergestell" (auch "Fahrgestell" genannt) werden insbesondere die tragenden Teile des Anhängers verstanden. An dem Untergestell sind insbesondere die Radaufhängungen, die Anhängerkupplung und/oder Deichsel, die Anhängerelektronik und gegebenenfalls ein Hilfsmotor befestigt. Des Weiteren nimmt das Untergestell das Bodenelement auf und ist mit diesem verbunden. Alternativ können die Radaufhängungen, die Anhängerkupplung und die vorstehend genannten weiteren Bestandteile eines Untergestells jedoch auch direkt am Bodenelement befestigt sein, sodass auf ein Untergestell selbst verzichtet werden kann.

Der Anhänger ist insbesondere für die Nutzung mit einem Fahrrad geeignet. Selbstverständlich kann der Anhänger auch hinter jedem anderen Zugfahrzeug, wie einem PKW, einem Traktor, einem Kraftrad oder einem sonstigen motorisierten Fahrzeug, mitgeführt werden.

Ein "Fahrrad" ist insbesondere ein mindestens zweirädriges, üblicherweise einspuriges Landfahrzeug, welches durch Muskelkraft einer auf ihm befindlichen Person durch Treten von Pedalen oder Bewegen von Handkurbeln angetrieben wird. Bei einem Fahrrad kann es sich auch um ein Fahrrad mit einem elektrischen Hilfsmotor, wie ein E-Bike, Elektrofahrrad oder Pedelec, handeln. Unter einem Fahrrad wird auch eine Liegefahrrad oder ein Trike verstanden.

Das "Bodenelement" ist insbesondere ein dreidimensional geformtes Element und das unterste Element des Anhängers, welches auf dem Untergestell aufliegt und mit diesem verbunden ist. Das Bodenelement weist insbesondere eine festes und/oder formbeständiges Material auf. Das Bodenelement weist insbesondere eine Grundplatte und/oder Ladefläche auf, welche bevorzugt von vier Seitenwänden umgeben ist. Das Bodenelement ist oben entweder vollständig oder teilweise offen. Bevorzugt weist das Bodenelement oben teilweise eine Dachfläche bis dorthin auf, wo das Verbindungselement aufgerichtet wird. Des Weiteren kann das Bodenelement einen Stauraum und/oder eine Verstärkung aufweisen. Das Bodenelement weist insbesondere eine trogförmige Grundform auf. Das Bodenelement weist auf der Seite, welcher der Fahrtrichtung entgegengesetzt ist oder zu der vertikal aufgerichtet wird, insbesondere eine Seitenwand mit einer geringeren Höhe als die anderen Seitenwände auf oder diese Seitenwand ist als klappbare Rück- oder Seitenwand ausgebildet. Ebenso kann der Anhänger auch frei von einer Rückwand entgegen der Fahrtrichtung oder frei von einer Seitenwand auf der Seite des vertikalen Aufrichtens sein.

Das "Verbindungselement" ist insbesondere ein dreidimensional geformtes Element und weist insbesondere eine obere Fläche mit mindestens zwei angrenzenden sich gegenüberliegenden Seitenflächen auf. Das Verbindungselement weist insbesondere eine festes und/oder formbeständiges Material auf. Das Dachelement weist insbesondere eine dreieckige Grundform auf. Im Aufbauzustand grenzt die obere Fläche bevorzugt auf der einen Seite an eine Dachfläche des Bodenelementes und auf der anderen Seite an die Dachfläche des Dachelementes. Die zwei gegenüberliegenden Seitenwände des Verbindungselementes sind bevorzugt parallel zueinander angeordnet und liegen in ihrer Längsausrichtung in der Richtung, in welcher die Verlängerung des Bodenelementes durch das vertikal aufgerichtete Dachelement erfolgt. Die beiden sich gegenüberliegenden Seitenwände müssen jedoch nicht zwingend parallel zueinander angeordnet sein, sondern können beispielsweise auch nach oben hin spitz aufeinander zulaufen, sodass eine dreieckige Form im Querschnitt ausgebildet wird. In diesem Fall entspricht die obere Fläche (Dachfläche) des Verbindungselementes lediglich der Kante, an der die beiden spitz aufeinander zulaufenden Seitenwände aneinander anstoßen.

Das "Dachelement" ist insbesondere ein dreidimensional geformtes Element, welches im Fahrtzustand eine in Wesentlichen horizontal ausgerichtete Dachfläche mit vier angrenzenden Seitenwänden aufweist. Bevorzugt umschließt das Dachelement von außen oben und seitlich das Verbindungselement und/oder das Bodenelement. Um eine ausreichende Höhe im Aufbauzustand bereitzustellen, kann das Verbindungselement jedoch im Fahrtzustand auch unten über das Dachelement und/oder das Bodenelement hinausgehen und somit bis in den Bereich des Untergestells reichen, solange keine Bodenberührung stattfindet. In diesem Fall umschließt das Dachelement im unteren Bereich nicht vollständig das gestapelte Verbindungselement im Fahrtzustand. Das Dachelement weist insbesondere eine nach unten offene, kastenförmige Grundform auf. Im Aufbauzustand steht das Dachelement auf einer seiner Seitenflächen des Fahrtzustandes insbesondere auf und/oder neben dem Bodenelement. Das Dachelement weist insbesondere eine festes und/oder formbeständiges Material auf.

Unter einem "Fahrtzustand" wird insbesondere verstanden, dass der Anhänger rollt. Bei einem Fahrtzustand wird der Anhänger insbesondere von einem Zugfahrzeug gezogen.

Unter einem "Aufbauzustand" des Anhängers wird insbesondere verstanden, dass der Anhänger frei von einer Fahrt ist und somit der Anhänger steht. Im Aufbauzustand ist insbesondere durch Aufrichten des Dachelementes und des Verbindungselementes der fest umschlossene Nutzraum im Inneren des Anhängers vergrößert. Im Aufbauzustand weist der Anhänger insbesondere eine Stehhöhe, insbesondere von größer 160 cm, bevorzugt von größer 170 cm, besonders bevorzugt von größer 180 cm, auf.

Unter einem "vertikalen Aufrichten" wird insbesondere verstanden, dass das im Fahrtzustand im Wesentlichen horizontal ausgerichtete Dachelement und somit die im Wesentlichen horizontal ausgerichtete Dachfläche in einer vertikalen Ausrichtung im Aufbauzustand aufgestellt werden. Dabei liegt das vertikal aufgerichtete Dachelement insbesondere auf einer seiner Seitenwände auf. Je nachdem, ob das vertikale Aufrichten des Dachelementes in Zugrichtung vor oder hinter dem Anhänger oder rechts oder links vom Anhänger erfolgt, liegt das vertikal aufgerichtete Dachelement entsprechend auf einer Seitenfläche der Breite oder der Länge des Dachelementes auf. Da die entsprechende nun anliegende Seitenwand des Bodenelementes eine geringere Höhe als das nun vertikal aufgerichtete Dachelement und/oder eine entsprechende Öffnung aufweist, gehen der innere Hohlraum des Bodenelementes und der innere Hohlraum des Dachelementes an dieser Stelle direkt ineinander über und es wird direkt eine Vergrößerung des Nutzraumes geschaffen. Selbstverständlich kann das Dachelement aber auch auf dem Bodenelement selbst aufgerichtet werden und somit mit einer Seitenfläche auf dem Bodenelement stehen.

Unter "im Wesentlichen vertikales Aufrichten" wird verstanden, dass hier nicht zwingend ein Winkel von 90° des aufgerichteten Dachelementes zum Boden eingehalten werden muss, sondern hier auch eine Winkelabweichung auftreten kann.

Unter einem "Aufrichten des Verbindungselementes" wird insbesondere verstanden, dass die obere Fläche (Dachfläche) und die zwei angrenzenden sich gegenüberliegenden Seitenwände des Verbindungselementes derart in die Höhe bewegt werden, dass diese an der einen Seite an der Dachfläche und an den entsprechenden Seitenwänden des Bodenelementes angrenzen und auf der anderen Seite an dem vertikal aufgerichteten Dachelement angrenzen, sodass ein fest umschlossener Nutzraum im Inneren des Anhängers vorliegt, dessen Höhe sich von der einen Seite des Anhängers mit im Wesentlichen der Höhe des Bodenelementes über die Höhe des Verbindungselementes zu der Höhe des Dachelementes vergrößert. Somit wird ein Nutzraum geschaffen, welcher zumindest von der Seite der Dachfläche (im Fahrzustand) des vertikal aufgerichteten Dachelementes im aufgerichteten Zustand begehbar ist.

Unter einem "Nutzraum" wird insbesondere ein Hohlraum im Inneren des Anhängers verstanden, welcher für eine entsprechende Zweckbestimmung genutzt werden kann. Der Nutzraum kann insbesondere als Wohn- und/oder Schlafraum, Lagerraum, Verkaufsraum, Transportraum oder andersartig genutzt werden.

Unter "fest umschlossen" wird insbesondere verstanden, dass der Nutzraum von festen Wänden umgeben ist, wobei beispielsweise auch "Fenster" mit aus Folienmaterial vorgesehen sein können.

In einer weiteren Ausführungsform des Anhängers ist oder sind das Dachelement und/oder das Verbindungselement mittels eines Schieb-, Dreh-, Klapp- und/oder Schwenkmechanismus aufrichtbar.

Somit kann durch Aufbringen einer Bewegungsrichtung und/oder Kraft auf das Dachelement oder das Verbindungselement durch einen Benutzer in einfacher Weise das Dachelement und/oder das Verbindungselement aufgerichtet werden.

Ein "Schiebmechanismus" ist insbesondere ein Bauteil oder mehrere Bauteile, welches oder welche eine Bewegung des Dachelementes und/oder des Verbindungselementes auf einer vorgegebenen Bahn und somit ein Verschieben ermöglichen. Bei einem Schiebemechanismus kann es sich beispielsweise um eine Schiebe- und/oder Führungsschiene handeln.

Ein "Drehmechanismus" ist insbesondere ein Bauteil oder mehrere Bauteile, welches oder welche dem Dachelement und/oder dem Verbindungselement eine Drehbewegung aufprägen. Bei einem Drehmechanismus kann es sich beispielsweise um ein Scharnier und/oder um ein um eine Achse drehbares Gelenk handeln.

Unter einem "Klappmechanismus" wird insbesondere ein Bauteil oder mehrere Bauteile erstanden, welche ein Drehen des Dachelementes und/oder des Verbindungselementes um eine feststehende waagerechte Drehachse ermöglichen.

Unter "Schwenkmechanismus" wird insbesondere ein Bauteil oder mehrere Bauteile verstanden, welche eine Bewegung um eine Achse oder einen Punkt des Dachelements oder des Verbindungselementes in einem bestimmten Winkelbereich zulassen. Bei einem Schwenken kann es sich um eine horizontale, schräge und/oder vertikale Bewegung handeln. Hierbei kann die Schwenkbewegung insbesondere auch eine Kurvenform einnehmen.

Um den Anhänger in seiner Längsrichtung im Aufbauzustand und somit den Nutzraum in Längsrichtung zu verlängern, ist im Aufbauzustand das Dachelement in seiner Längsabmessung der Dachfläche im Wesentlichen vertikal aufgerichtet, sodass mit einer Seitenwand des Dachelementes eine Länge des Bodenelementes in einer Längsrichtung des Anhängers verlängert ist.

Folglich wird hierbei das Dachelement vertikal aufgestellt in Längsrichtung des Anhängers und somit in Zugrichtung entweder vor dem Anhänger oder hinter dem Anhänger angeordnet und dadurch im Vergleich zum Fahrtzustand die Länge des Bodenelementes und somit die Länge des Nutzraumes verlängert. Da üblicherweise in Längsrichtung des Anhängers und somit in Fahrtrichtung das Dachelement eine längere Abmessung als in Querrichtung aufweist, steht das vertikal aufgerichtete Dachelement nun mit seiner längeren Längsabmessung aufrecht und weist eine deutlich höhere Höhe als das Bodenelement auf. Diese hohe Höhe des vertikal aufgerichteten Dachelementes wird durch Aufrichten des Verbindungselementes und dessen obere Fläche (Dachfläche) und/oder dessen Seitenwänden in Zugrichtung nach vorne bis auf die Höhe des Bodenelementes und auf die Seitenflächen des Bodenelementes heruntergeführt.

Unter "Längsabmessung" wird insbesondere die längste Abmessung der Dachfläche und somit des Dachelementes verstanden.

Die "Längsrichtung" ist insbesondere die längste Ausdehnung des Anhängers. Die Längsrichtung ist insbesondere in Zugrichtung ausgerichtet.

Hierzu sei herausgestellt, dass insbesondere bei einer abnehmbaren Deichsel das Dachelement beispielsweise auch vor die Vorderwand des Bodenelementes und somit vor den Anhänger im Fahrtzustand vertikal aufgerichtet werden kann.

In einer weiteren Ausführungsform des Anhängers ist im Aufbauzustand das Dachelement in seiner Breitenabmessung der Dachfläche im Wesentlichen vertikal ausgerichtet, sodass mit einer Seitenwand des Dachelementes eine Breite des Bodenelementes quer zu der Längsrichtung des Anhängers verlängert ist.

Somit wird im Aufbauzustand eine größere Breite des Anhängers dadurch realisiert, dass das Dachelement entweder zur linken oder zur rechten Seite des Bodenelementes vertikal aufgerichtet wird. Somit steht in diesem Fall die Breitenabmessung der Dachfläche vertikal hoch auf und es wird seitlich der Nutzraum vergrößert.

Die "Breitenabmessung" ist insbesondere die längste Abmessung der Breite der Dachfläche und somit des Dachelementes. Die Breitenabmessung steht insbesondere quer zur Längsabmessung.

Um ein Eigengewicht des Anhängers von ≤ 40 kg bereitzustellen und dadurch auch längere Fahrtstrecken zu ermöglichen, weist oder weisen das Bodenelement, das Verbindungselement und/oder das Dachelement eine Kunststoffplatte, insbesondere eine Kunststoffplatte in Sandwichbauweise, auf.

Folglich weist der Anhänger in Leichtbauweise aufgrund seines geringen Eigengewichtes die Möglichkeit einer hohen Zuladung auf. Dementsprechend kann der Anhänger beispielsweise als Wohn- und/oder Schlafanhänger mit Möbeln ausgerüstet werden.

Bei einer "Kunststoffplatte" handelt es sich insbesondere um eine Platte, welche Kunststoff aufweist. Die Kunststoffplatte weist insbesondere eine hohe Festigkeit bei geringem Gewicht auf. Die Kunststoffplatte ist insbesondere in Sandwichbauweise mit mehreren Schichten ausgeführt. Die Sandwichbauweise weist insbesondere eine Abfolge Deckschicht-Kern-Deckschicht auf. Beispielsweise weist die Kunststoffplatte in Sandwichbauweise oben und unten zwei feste Oberflächen auf, zwischen welchen eine leichtere Innenschicht angeordnet ist. Dieser leichtere Kern kann beispielsweise aus einem Vollmaterial, wie Polyethylen, Schaumstoff, einem Dämmmaterial und/oder einem Wabengitter, beispielsweise aus Pappe oder Kunststoff, bestehen. Beispielsweise kann es sich bei der Kunststoffplatte um thermoplastisches Sandwichpaneel handeln, welches einen Polypropylen-Wabenkern und oben und unten glasfaserverstärkte Polypropylen-Deckschichten aufweist, welche durch Schmelzkaschierung stofflich gleichmäßig und beständig verbunden sind. Die Kunststoffplatte weist insbesondere ein Gewicht in einem Bereich von 2,50 bis 7,00 kg/m², bevorzugt von 3,8 kg/m², auf.

Durch die Ausführung des Dachelementes, des Verbindungselementes und des Bodenelementes mittels einer entsprechenden Kunststoffplatte, weist der Anhänger ein Eigengewicht von < 40 kg, insbesondere < 35 kg, bevorzugt von < 30 kg, auf. Dadurch ist der Anhänger leichter handbarbar und rangierbar.

Bevorzugt weisen das Bodenelement, das Verbindungselement und/oder das Dachelement Dichtungsmaterial auf, sodass die Kunststoffplatten im Aufbauzustand gegeneinander abgedichtet sind und dadurch der Anhänger wind- und/oder wasserdicht ist.

In einer weiteren Ausführungsform des Anhängers weist die Kunststoffplatte eine Materialstärke in einem Bereich von 10 mm bis 50 mm, insbesondere von 15 mm bis 40 mm, bevorzugt von 20 mm bis 35 mm, auf.

Dadurch wird eine ausreichende Materialstärke bezüglich der Festigkeit und Belastbarkeit, insbesondere des Bodenelementes, bereitgestellt, ohne dass das Eigengewicht des Anhängers unnötig erhöht ist. Hierbei können das Bodenelement, das Verbindungselement und/oder das Dachelement dieselbe Materialstärke oder unterschiedliche Materialstärken aufweisen.

Um das Dachelement optimal vertikal aufrichten und/oder den Anhänger optimal nutzen zu könne, weist das Dachelement eine Verstärkungsplatte, einen Standfuß, eine Tür und/oder eine Befestigungsstange und/oder das Bodenelement einen Standfuß auf.

Es ist besonders vorteilhaft, wenn das Dachelement außen an der Seitenwand eine Verstärkungsplatte aufweist, welche beim vertikalen Ausrichten in Richtung des Bodens angeordnet wird und somit die Standfläche im Aufbauzustand darstellt. Zudem kann an dieser Seitenwand und/oder der Verstärkungsplatte ein beispielsweise klappbarer Standfuß angeordnet ist, sodass das Dachelement über diese Seitenwand und/oder Verstärkungsplatte und über den Standfuß auf dem Boden steht.

Bevorzugt weist das Dachelement auf der Seite der vertikal aufgerichteten Dachfläche eine Tür auf, sodass der Nutzraum im Inneren des Anhängers durch eine Person betretbar ist. Eine beispielsweise ausklappbare Befestigungsstange kann ebenfalls an der Dachfläche angeordnet sein, um beispielsweise im Aufbauzustand das Aufhängen einer Vorplane und/oder eines Vorzeltes vor dem aufgerichteten Dachelement und/oder der Tür des Anhängers zu ermöglichen. Ebenso kann ein Teil der Dachfläche oder die gesamte Dachfläche ausklappbar ausgebildet sein, sodass nach dem vertikalen Aufrichten das Teil oder die gesamte Dachfläche durch Ausklappen horizontal ausgerichtet und somit ein Vordach ausbildet ist. Hierbei wird das Teil oder die gesamte Dachfläche in horizontaler Ausrichtung beispielsweise von einer ausklappbaren oder ausziehbaren Querstange abgestützt.

Um die Standsicherheit des Anhängers zu erhöhen, ist es besonders vorteilhaft, wenn das Bodenelement mindestens einen Standfuß und bevorzugt vier Standfüße an jeder Ecke aufweist, welche beispielsweise ausgeklappt oder von unten in das Bodenelement eingesteckt werden können.

Des Weiteren ist es vorteilhaft, wenn der Anhänger, das Dachelement, das Verbindungselement und/oder das Bodenelement weitere Komponenten, wie beispielsweise Fenster und/oder außen einen ausklappbaren Campingtisch, entsprechend der jeweiligen Nutzung aufweist oder aufweisen.

In einer weiteren Ausführungsform weist der Anhänger im Fahrtzustand eine Höhe von < 0,90 m, insbesondere von < 0,85 m, bevorzugt von < 0,80 m, auf.

Somit weist der Anhänger im Fahrtzustand eine geringe Höhe auf, welche unterhalb der Höhe eines üblichen Gepäckhalters eines Fahrrades liegt. Somit kann der Gepäckhalter optimal beladen und benutzt werden, ohne dass der dahinter angeordnete Anhänger dabei stört. Zudem wird eine freie Sicht des Fahrers nach hinten während der Fahrt ermöglicht.

Insbesondere weist der Anhänger durch eine geringe Höhe von < 90 cm einen geringen Windwiderstand und eine geringe Kippanfälligkeit bei Seitenwind auf und kann deshalb auch ohne Einschränkungen für lange Fahrradtouren verwendet werden.

Um den Windwiderstand des Anhängers weiter zu minimieren, eine Rangierbarkeit des Anhängers zu ermöglichen und/oder die jeweilige Straßenverkehrsordnung einzuhalten, weist der Anhänger im Fahrtzustand eine Breite von < 1,00 m, insbesondere von < 0,95 m, bevorzugt von < 0,90 m, und/oder eine Länge von < 1,70 m, insbesondere von < 1,60 m, bevorzugt von < 1,50 m, auf.

Bei einem motorbetriebenen Zugfahrzeug kann der Anhänger auch eine größere Breite, bevorzugt jedoch von < 1,30 m, aufweisen.

Da die Länge des Anhängers im Fahrtzustand im Aufbauzustand durch das Anordnen des Dachelementes in vertikaler Ausrichtung vor oder hinter dem Anhänger in Längsrichtung des Anhängers verlängert wird, wird selbst bei einer geringen Länge von < 1,60 m durch die Verlängerung über das Dachelement eine ausreichende Länge bereitgestellt, damit in dem Anhänger beispielsweise eine Person ausgestreckt schlafen kann. Somit kann beispielsweise eine Liegefläche mit einer Länge in einem Bereich von 1,80 m bis 2,20 m bereitgestellt werden.

Im Aufbauzustand stellt der Anhänger insbesondere eine Fläche in einem Bereich von 2,0 m² bis 8 m², bevorzugt von 3,0 bis 7,0 m², zum Nutzen zur Verfügung.

In einer weiteren Ausführungsform weist der Anhänger einen elektrischen Antrieb und/oder einen Energiespeicher- oder -gewinnungseinheit auf.

Dadurch kann beispielsweise bei Ausführung des elektrischen Antriebs als Hilfsmotor bei einer hohen Last des Anhängers eine unterstützende Vorschubbewegung erzeugt werden. Durch eine Energiespeicher- und/oder -gewinnungseinheit können beispielsweise Verbraucher im Anhänger, wie beispielsweise eine Herdplatte bei Ausgestaltung des Anhängers als Wohnanhänger und/oder eine Sicherheitsbeleuchtung (Rücklichter) des Anhängers, versorgt werden. Ebenso kann die Energiespeicher- und/oder -gewinnungseinheit zum Aufladen eines Akkumulators eines E-Bikes, welches den Anhänger zieht, verwendet werden.

Ein "elektrischer Antrieb" ist insbesondere ein Antrieb mit einem oder mehreren Elektromotoren. Ein elektrischer Antrieb kann insbesondere als Hilfsmotor zusätzlich zu der Zugkraft durch ein Zugfahrzeug eingesetzt werden. Beispielsweise wird ein Hilfsmotor bei einem steilen Anstieg auf der Fahrtstrecke zugeschaltet, um zu verhindern, dass der Anhänger aufgrund seines Gewichtes eine entgegengesetzte Zugkraft nach hinten aufgrund der Schräge aufbringt.

Bei einer "Energiespeichereinheit" handelt es sich insbesondere um einen Speicher von momentan verfügbarer aber nicht benötigter Energie zur späteren Nutzung. Bei einer Energiespeichereinheit kann es sich beispielsweise um einen Akkumulator oder um eine Batterie handeln. Eine "Energiegewinnungseinheit" ist insbesondere ein Energiewandler, welcher Energie zwischen der Umgebung und dem Anhänger in mindestens zwei Energieformen austauscht. Beispielsweise handelt es sich bei der Energiegewinnungseinheit um eine generatorische Bremse, welche die kinetische Energie beim Abbremsen in elektrische Energie überführt, oder um ein Solarpaneel auf dem Dach des Anhängers, welches das Licht der Sonne direkt in elektrische Energie umwandelt.

Im Weiteren wird die Erfindung anhand eines Ausführungsbeispiels näher erläutert. Es zeigen
- Figur 1: eine stark schematische Seitenansicht eines Fahrradanhängers im Fahrtzustand,
- Figur 2: eine stark schematische Querschnittsdarstellung des Fahrradanhängers im vorderen Bereich im Fahrtzustand, und
- Figur 3: eine stark schematische Seitenansicht des Fahrradanhängers im Aufbauzustand.

Ein Fahrradanhänger 101 weist ein Untergestell 103 mit beidseitig einem Rad 105 auf. Die Räder 105 stehen auf einem Boden 113. Der Fahrradanhänger 101 weist einen Bodenabstand 111 von 29 cm auf. Des Weiteren weist der Fahrradanhänger 101 eine Höhe 151 im Fahrtzustand von 80 cm und eine Breite 155 von 88 cm auf.

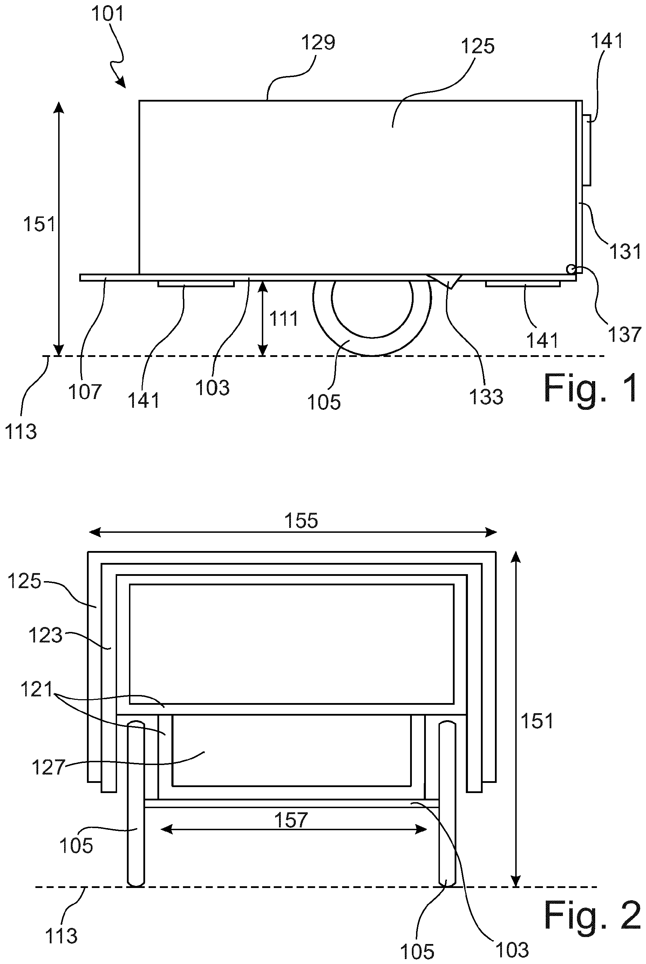

Der Fahrradanhänger 101 weist außen sichtbar (Figur 1) ein Deckelteil 125 mit einem Dach 129 auf. Vorne an dem Anhänger 101 ist an dem Untergestell 103 eine Deichsel 107 sowie auf der Unterseite an jeder Ecke ein eingeklappter Klappfuß 141 angebracht. Das Deckelteil 125 weist an seiner Rückseite und somit der Deichsel 107 gegenüberliegenden Seite eine Verstärkungsplatte 131 auf, an welcher ein weiterer Klappfuß 141 angebracht ist. Innenliegend im Deckelteil 125 ist ein Drehscharnier 137 durchgehend über eine gesamte Breite des Deckelteils 125 geführt. Unterhalb des Deckelteils 125 ist ein Verbindungsteil 123 angeordnet, von dem im Fahrtzustand außen nur eine Ecke einer Seitenwand 133 des Verbindungsteils 123 in der Seitenansicht sichtbar ist (siehe Figur 1).

Das aufeinander gestapelte Deckelteil 125 und das Verbindungsteil 123 liegen auf einem Bodenteil 121 auf, welches einen Stauraum 127 aufweist (siehe Figur 2). Das Bodenteil 121 liegt wiederum auf dem Untergestell 103 auf und ist mit diesem fest verbunden. Der Stauraum 127 ist zwischen den Rädern 105 angeordnet und weist eine Breite von 62 cm auf.

Das Deckelteil 125, das Verbindungsteil 123 und das Bodenteil 121 sind aus Polypropylen-Platten mit einem Wabenkern jeweils mit einer Materialstärke von 25 mm gefertigt. Dadurch weist der Fahrradanhänger 101 ein geringes Eigengewicht von 38 kg auf.

Mit dem Fahrradanhänger 101 werden folgende Arbeitsgänge durchgeführt:
Der Fahrradanhänger 101 wird über die Deichsel 107 und einer nicht gezeigten Anhängerkupplung an ein nicht gezeigtes Fahrrad befestigt und anschließend während einer Fahrradtour mittels des Fahrrads von einem Radfahrer gezogen. Am Ankunftsort wird der Fahrradanhänger 101 entsprechend über die Anhängerkupplung vom Radfahrer abgekoppelt und zur Erhöhung der Standsicherheit und Belastbarkeit werden die Klappfüße 141 an der Unterseite des Untergestells 103 auf den Boden ausgeklappt. Anschließend wird das Deckelteil 125 nach hinten über das Drehscharnier 137 umgeklappt und der Klappfuß 141 an der Verstärkungsplatte 131 des Deckelteils 125 ausgeklappt, sodass das Deckelteil 125 über die Verstärkungsplatte 31 und den Klappfuß 141 auf dem Boden 113 steht.

Durch dieses vertikale Aufrichten des Deckelteils 125 ist das Dach 129 des Deckelteils 125 in seiner Längsausrichtung vertikal ausgerichtet und das Deckelteil 125 weist eine Höhe 161 in diesem Aufbauzustand von 1,73 m auf.

Nach dem vertikalen Aufrichten des Deckelteils 125 wird das Verbindungsteil 123 an seiner Seitenwand 133 noch im Fahrtzustand gegriffen und mittels einer Schiebeschiene mit Schwenkbolzen 139 wird aufgrund einer Schiebe- und Drehbewegung 145 durch Ziehen der Seitenwand 133 nach hinten entgegen der Deichsel 107 und nach oben bewegt, sodass sich die Seitenwand 143 im Aufbauzustand zwischen dem hinteren aufgerichteten Deckelteil 125 und dem vorderen Teil des Bodenteils 121 befindet und die Höhe des Bodenteils 121 sich stetig in Richtung auf das Deckelteil 125 erhöht.

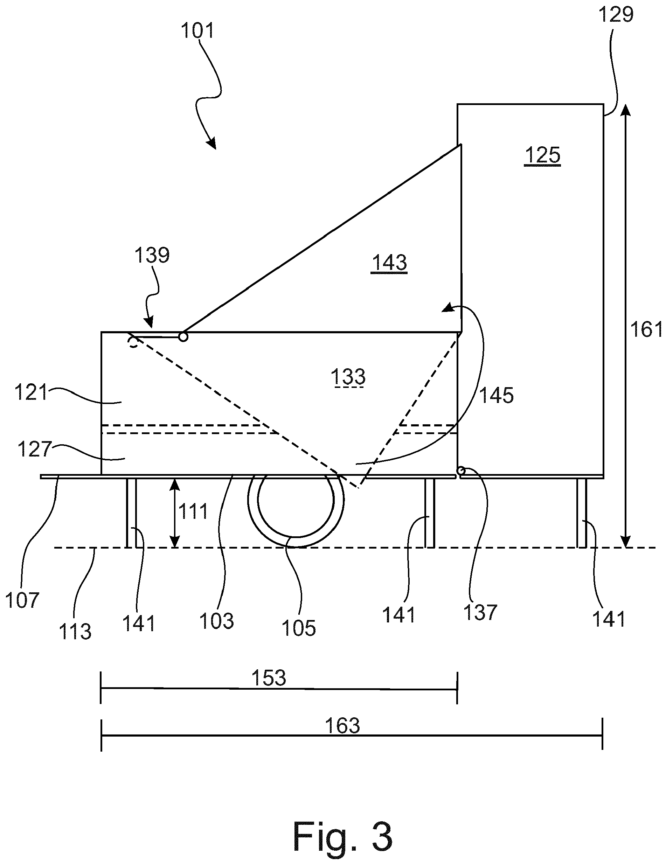

Das Bodenteil 121, das Verbindungsteil 123 und das Deckelteil 125 sind im Aufbauzustand gegeneinander durch nicht in Figur 3 gezeigte Dichtungen wind- und wetterdicht abgedichtet, sodass im Inneren des Fahrradanhängers 101 ein großer fest umschlossener Nutzraum entstanden ist. Die Länge des Fahrradanhängers 153 im Fahrtzustand ist von 1,28 m durch das Umklappen des Deckelteils 125 nach hinten auf eine Länge des Fahrradanhängers 163 im Aufbauzustand von 1,80 m verlängert worden.

Durch eine nicht in Figur 3 gezeigte Tür im Dach 129 des aufgerichteten Deckelteils 125 tritt der Radfahrer in das Innere des Deckelteils 125 und somit des Fahrradanhängers 101 im Aufbauzustand ein. Der Radfahrer stellt nun eine sich im Inneren befindende Kiste mit einer selben Höhe wie die Oberseite des Stauraums 127 auf den Boden des Deckelteils 125 und hat somit eine Liegefläche von circa 1,80 m zum Schlafen.

Somit wird ein Fahrradanhänger 101 bereitgestellt, welcher im Fahrtzustand aufgrund Stapelung des Bodenteils 121, Verbindungsteils 123 und Deckelteils 125 mit geringen Abmessungen sehr kompakt ist, und welcher durch einfaches Bewegen und Ausrichten des Deckelteils 125 und des Verbindungsteils 123 relativ zum Bodenteil 121 des Anhängers 101 einen ausreichend großen Wohnraum ermöglicht.

### Bezugszeichenliste

- 101: Fahrradanhänger
- 103: Untergestell
- 105: Rad
- 107: Deichsel
- 111: Bodenabstand
- 113: Boden
- 121: Bodenteil
- 123: Verbindungsteil
- 125: Deckelteil
- 127: Stauraum
- 129: Dach des Deckelteils
- 131: Verstärkungsplatte
- 133: Seitenwand des Verbindungsteils (Fahrzustand)
- 137: Drehscharnier
- 139: Schiebeschiene mit Schwenkbolzen
- 141: Klappfuß
- 143: Seitenwand des Verbindungsteils (Aufbauzustand)
- 145: Schiebe- und Drehbewegung
- 151: Höhe des Fahrradanhängers (Fahrtzustand)
- 153: Länge des Fahrradanhängers (Fahrtzustand)
- 155: Breite des Fahrradanhängers (Fahrtzustand)
- 157: Breite des Stauraums
- 161: Höhe des Deckelteils (Aufbauzustand)
- 163: Länge des Fahrradanhängers (Aufbauzustand)

## Patentansprüche

1. Anhänger (101) insbesondere für ein Fahrrad zum Bereitstellen eines Nutzraumes, wobei der Anhänger ein rollbares Untergestell (103) mit einem Bodenelement (121), ein Dachelement (125) und ein Verbindungselement (123) zum Verbinden des Bodenelementes mit dem Dachelement in einem Aufbauzustand aufweist, und das Bodenelement zumindest teilweise oben offen ist, das Dachelement eine Dachfläche (129) mit vier angrenzenden Seitenwänden aufweist und das Verbindungselement eine obere Fläche mit mindestens zwei angrenzenden, sich gegenüberliegenden Seitenwänden (133) aufweist, **dadurch gekennzeichnet, dass** in einem Fahrzustand das Dachelement das Verbindungselement und das Bodenelement von außen oben und zumindest teilweise seitlich umgibt und zum Erreichen des Aufbauzustandes des Anhängers das Dachelement und das Verbindungselement derart eingerichtet sind, dass das Dachelement durch ein im Wesentlichen vertikales Aufrichten eine Abmessung des Bodenelementes verlängert und das Verbindungselement durch Aufrichten eine Höhe des Bodenelementes erhöht, sodass ein fest umschlossener Nutzraum im Inneren des Anhängers vorliegt.

2. Anhänger nach Anspruch 2, **dadurch gekennzeichnet, dass** das Dachelement und/oder das Verbindungselement mittels eines Schieb-, Dreh- (137), Klapp- und/oder Schwenkmechanismus (139) aufrichtbar ist oder sind.

3. Anhänger nach einem der Ansprüche 1 oder 2, **dadurch gekennzeichnet, dass** im Aufbauzustand das Dachelement in seiner Längsabmessung der Dachfläche im Wesentlichen vertikal aufgerichtet ist, sodass mit einer Seitenwand des Dachelementes eine Länge des Bodenelementes in einer Längsrichtung des Anhängers verlängert ist.

4. Anhänger nach einem der Ansprüche 1 oder 2, **dadurch gekennzeichnet, dass** im Aufbauzustand das Dachelement in seiner Breitenabmessung der Dachfläche im Wesentlichen vertikal aufgerichtet ist, sodass mit einer Seitenwand des Dachelementes eine Breite des Bodenelementes quer zu der Längsrichtung des Anhängers verlängert ist.

5. Anhänger nach einem der vorherigen Ansprüche, **dadurch gekennzeichnet, dass** das Bodenelement, das Verbindungselement und/oder das Dachelement eine Kunststoffplatte, insbesondere eine Kunststoffplatte in Sandwichbauweise, aufweist oder aufweisen.

6. Anhänger nach Anspruch 5, **dadurch gekennzeichnet, dass** die Kunststoffplatte eine Materialstärke in einem Bereich von 10 mm bis 50 mm, insbesondere von 15 mm bis 40 mm, bevorzugt von 20 mm bis 35 mm, aufweist.

7. Anhänger nach einem der vorherigen Ansprüche, **dadurch gekennzeichnet, dass** das Dachelement eine Verstärkungsplatte (131), einen Standfuß (141), eine Tür und/oder eine Befestigungsstange und/oder das Bodenelement einen Standfuß (141) aufweist.

8. Anhänger nach einem der vorherigen Ansprüche, **dadurch gekennzeichnet, dass** der Anhänger im Fahrzustand eine Höhe (151) von kleiner 0,90 m, insbesondere von kleiner 0,85 m, bevorzugt von kleiner 0,80 m, aufweist.

9. Anhänger nach einem der vorherigen Ansprüche, **dadurch gekennzeichnet, dass** der Anhänger im Fahrzustand eine Breite (155) von kleiner 1,00 m, insbesondere von kleiner 0,95 m, bevorzugt von kleiner 0,90 m, und/oder eine Länge von kleiner 1,70 m, insbesondere von kleiner 1,60 m, bevorzugt von kleiner 1,50 m, aufweist.

10. Anhänger nach einem der vorherigen Ansprüche, **dadurch gekennzeichnet, dass** der Anhänger einen elektrischen Antrieb und/oder eine Energiespeicher- und/oder -gewinnungseinheit aufweist.
